(19) Europäisches Patentamt European Patent Office Office européen des brevets

(11) **EP 3 950 583 B1**

(12) **EUROPEAN PATENT SPECIFICATION**

(45) Date of publication and mention of the grant of the patent:
**17.04.2024 Bulletin 2024/16**

(21) Application number: **20785414.2**

(22) Date of filing: **26.03.2020**

(51) International Patent Classification (IPC):
**C01B 21/068** *(2006.01)* **C04B 35/593** *(2006.01)*

(52) Cooperative Patent Classification (CPC):
**C01B 21/0682; C04B 35/584; C04B 35/591; C04B 35/6262;** C01P 2004/61; C01P 2006/80; C04B 2235/3208; C04B 2235/3224; C04B 2235/3225; C04B 2235/3873; C04B 2235/428; C04B 2235/445; C04B 2235/5418; C04B 2235/5436; C04B 2235/604; (Cont.)

(86) International application number:
**PCT/JP2020/013838**

(87) International publication number:
**WO 2020/203697 (08.10.2020 Gazette 2020/41)**

(54) **SILICON NITRIDE POWDER AND METHOD FOR PRODUCING SAME, AND METHOD FOR PRODUCING SILICON NITRIDE SINTERED BODY**

SILICIUMNITRIDPULVER UND VERFAHREN ZUR HERSTELLUNG DAVON UND VERFAHREN ZUR HERSTELLUNG VON SILICIUMNITRIDSINTERKÖRPER

POUDRE DE NITRURE DE SILICIUM ET PROCÉDÉ DE PRODUCTION ASSOCIÉ, ET PROCÉDÉ DE PRODUCTION DE CORPS FRITTÉ EN NITRURE DE SILICIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 JP 2019066176**

(43) Date of publication of application:
**09.02.2022 Bulletin 2022/06**

(73) Proprietor: **Denka Company Limited**
**Tokyo 103-8338 (JP)**

(72) Inventors:
• **MIYASHITA Toshiyuki**
**Tokyo 103-8338 (JP)**
• **NAKAMURA Yuzo**
**Tokyo 103-8338 (JP)**

(74) Representative: **Hoffmann Eitle**
**Patent- und Rechtsanwälte PartmbB**
**Arabellastraße 30**
**81925 München (DE)**

(56) References cited:
**JP-A- S5 884 108      JP-A- H06 135 706**
**JP-A- 2000 178 013    JP-A- 2000 178 013**
**JP-A- 2002 128 568**

(52) Cooperative Patent Classification (CPC): (Cont.)
C04B 2235/608; C04B 2235/6567;
C04B 2235/6582; C04B 2235/6587; C04B 2235/72;
C04B 2235/724; C04B 2235/96; C04B 2235/9607

## Description

### Technical Field

The present disclosure relates to a silicon nitride powder and a method for producing the same, and a method for producing a silicon nitride sintered body.

### Background Art

Since silicon nitride is a material having excellent strength, hardness, toughness, heat resistance, corrosion resistance, thermal shock resistance and the like, it is used for various industrial parts such as die casting machines and melting furnaces, and automobile parts. Use of a silicon nitride substrate as an insulating substrate for power modules of automobiles and machine tools is also being considered. For example, Patent Document 1 proposes use of a silicon nitride substrate as an aluminum-ceramic bonding substrate. In such applications, it is required to have high insulation and heat dissipation.

Regarding a method of synthesizing a silicon nitride powder used in production of a silicon nitride substrate, a direct nitriding method in which a silicon powder is nitrided under a mixed atmosphere containing hydrogen gas or ammonia gas and nitrogen gas, a silica powder reduction nitriding method, an imide decomposition method and the like are known. Among these, according to the imide decomposition method, it is possible to produce a silicon nitride powder having few impurities (for example, refer to Patent Document 2).

JP 2000-178013 relates to a silicon nitride powder capable of obtaining a sintered body having high anisotropy and low anisotropy. JP S58-84108 relates to a process to obtain high purity alpha-type silicon nitride with low impurity content by finely pulverizing high purity metallic silicon, molding the powder in the presence of a binder such as water, and nitriding the molded body at a specified temperature.

### Citation List

### Patent Literature

[Patent Document 1] Japanese Unexamined Patent Publication No. 2011-077546
[Patent Document 2] Japanese Unexamined Patent Publication No. 2000-302421

### Summary of Invention

### Technical Problem

In a silicon nitride sintered body used for a substrate, impurities contained in the silicon nitride sintered body are considered to be a factor influencing thermal conductivity. Impurities in the silicon nitride sintered body are influenced by impurities in a silicon nitride powder used in production of the silicon nitride sintered body. However, it is not yet clear which components of the impurities influence thermal conductivity of the silicon nitride sintered body or to what extent.

Here, although the imide method is effective in reducing impurities in the silicon nitride powder, a production cost tends to be high. Therefore, there is a demand for a silicon nitride powder that can be used to form a silicon nitride sintered body having high thermal conductivity while allowing a certain amount of impurities and reducing the production cost.

Therefore, the present disclosure provides a silicon nitride powder in which it is possible to produce a silicon nitride sintered body having high thermal conductivity at a low production cost and a method for producing the same. In addition, the present disclosure provides a method for producing a silicon nitride sintered body through which it is possible to produce a silicon nitride sintered body having high thermal conductivity at a low production cost.

### Solution to Problem

In a silicon nitride powder according to an aspect of the present disclosure, a total amount of fluorine is 100 to 1,000 ppm by mass, and a total amount of Fe, Al and Ca is 100 to 1,000 ppm by mass. Since a total content of Fe, Al and Ca is within a predetermined range, such a silicon nitride powder can be produced using a general-purpose grade raw material by a general production device. In addition, since a total amount of fluorine is also within a predetermined range, it is possible to lower the firing temperature when a silicon nitride powder is produced using, for example, a nitriding aid (fluorides of the elements Li, Na, K, Mg, Ca, Sr, and Ba) as a raw material. Due to these factors, it is possible to reduce the production cost of the silicon nitride sintered body. In addition, since a total amount of fluorine and a total amount of Fe, Al and Ca are equal to or less than a predetermined value, when the powder is used as a raw material for sintering, it is possible to obtain a silicon nitride sintered body having high thermal conductivity.

The amount of surface fluorine in the silicon nitride powder is preferably 300 ppm by mass or more. Fluorine present on the surface has an action of promoting sintering when a silicon nitride sintered body is produced. Therefore, even if the firing temperature is lowered, sintering can proceed sufficiently. Therefore, it is possible to further reduce the production cost and increase the strength.

The ratio of the amount of surface fluorine to the total amount of fluorine in the silicon nitride powder is 0.5 or more. Therefore, the proportion of fluorine present on the surface is higher than that in the inside, and sintering can proceed further. Therefore, it is possible to further reduce the production cost and increase the strength.

The ratio of the amount of surface fluorine to the total amount of fluorine in the silicon nitride powder may be 0.66 or less. Therefore, it is possible to sufficiently reduce the firing temperature when a silicon nitride powder is produced using a nitriding aid as a raw material. Therefore, it is possible to further reduce the production cost.

A method for producing a silicon nitride powder according to an aspect of the present disclosure includes a step in which a raw material which contains a silicon powder and fluoride and in which the content of fluoride with respect to the silicon powder is 0.1 to 2 mass% is fired under a mixed atmosphere containing nitrogen and at least one selected from the group consisting of hydrogen and ammonia to obtain a fired product, and a step in which the fired product is treated with hydrofluoric acid having a hydrogen fluoride concentration of 10 to 40 mass%.

According to the production method, it is possible to produce the silicon nitride powder at a production cost lower than that of the imide method. In addition, since a raw material having a fluoride content within a predetermined range is used, it is possible to reduce the production cost by lowering the firing temperature when the silicon nitride powder is produced using, for example, a nitriding aid as a raw material. In addition, since the fired product is treated with hydrofluoric acid having a hydrogen fluoride concentration of 10 to 40 mass%, fluorine is present on the surface. Therefore, when it is used as a raw material for sintering, sintering is promoted, and a silicon nitride sintered body having high thermal conductivity can be produced.

In the silicon nitride powder produced by the above production method, a total amount of fluorine is 100 to 1,000 ppm by mass, a total amount of Fe, Al and Ca is 100 to 1,000 ppm by mass, and a ratio of the amount of surface fluorine to the total amount of fluorine is 0.5 or more.

A method for producing a silicon nitride sintered body according to an aspect of the present disclosure includes a step in which a raw material for sintering, which contains the silicon nitride powder produced by the above method for producing the silicon nitride powder is molded and sintered. According to the production method, it is possible to produce the silicon nitride sintered body having high thermal conductivity at a low production cost.

## Advantageous Effects of Invention

According to the present disclosure, it is possible to provide a silicon nitride powder in which it is possible to produce a silicon nitride sintered body having high thermal conductivity at a low production cost and a method for producing the same. In addition, according to the present disclosure, it is possible to provide a method for producing a silicon nitride sintered body through which it is possible to produce a silicon nitride sintered body having high thermal conductivity at a low production cost.

## Description of Embodiments

Hereinafter, one embodiment of the present disclosure will be described. However, the following embodiments are examples for explaining the present disclosure, and are not intended to limit the present disclosure to the following content.

A total amount of fluorine in the silicon nitride powder ($Si_3N_4$ powder) is 100 to 1,000 ppm by mass, and a total amount of Fe, Al and Ca is 100 to 1,000 ppm by mass. In order to further lower the firing temperature when the silicon nitride powder is produced using, for example, a nitriding aid, as the raw material, and further reduce the production cost of the silicon nitride powder, a total amount of fluorine in the silicon nitride powder may be 200 ppm by mass or more, 300 ppm by mass or more, or 400 ppm by mass or more.

When the silicon nitride powder is used as a sintered raw material, in order to obtain a silicon nitride sintered body having sufficiently high thermal conductivity, a total amount of fluorine in the silicon nitride powder may be 900 ppm by mass or less, 850 ppm by mass or less, or 800 ppm by mass or less. When the upper limit of the total amount of fluorine is lowered, the amount of fluorine contained in the silicon nitride sintered body is reduced, and it is possible to sufficiently increase the thermal conductivity. However, even if fluorine with about the above lower limit value is contained in the silicon nitride powder, there is no significant influence on the thermal conductivity.

In order to further reduce the production cost of the silicon nitride powder, a total amount of Fe, Al and Ca in the silicon nitride powder may be 200 ppm by mass or more, 300 ppm by mass or more, or 400 ppm by mass or more. Such a silicon nitride powder can be produced at a low production cost. Regarding such a method, for example, a direct nitriding method using a silicon powder may be exemplified. Regarding the silicon powder used as a raw material, a general commercially available silicon powder can be used and a silicon powder synthesized by a general method can be used.

When the silicon nitride powder is used as a sintered raw material, in order to obtain a silicon nitride sintered body having high thermal conductivity, a total amount of Fe, Al and Ca in the silicon nitride powder may be 900 ppm by mass or less, 800 ppm by mass or less or 700 ppm by mass or less. Fe, Al and Ca are impurities that are generally contained in the raw material of the silicon nitride powder and have a great influence on characteristics of the silicon nitride sintered body. Therefore, when the upper limit of these impurities is lowered, it is possible to sufficiently increase the thermal conductivity of the silicon nitride sintered body. However, even if Fe, Al and Ca with about the above lower limit value are contained in the silicon nitride powder, there is no significant influence on the thermal conductivity.

The amount of surface fluorine in the silicon nitride powder is preferably 300 ppm by mass or more. Therefore, sintering is promoted when the silicon nitride sintered body is produced, and the strength of the silicon nitride sintered body can increase. In addition, it is also possible to further reduce the production cost by lowering the sintering temperature. In the same consideration, the amount of surface fluorine may be 350 ppm by mass or more or 400 ppm by mass or more. The upper limit of the amount of surface fluorine may be 800 ppm by mass or less or 700 ppm by mass or less in consideration of ease of production. The amount of surface fluorine can be adjusted by changing conditions (the concentration of hydrogen fluoride, etc.) when the silicon nitride powder is treated with hydrofluoric acid. Surface fluorine is fluorine that binds or adheres to the surface of the silicon nitride powder.

The ratio of the amount of surface fluorine to the total amount of fluorine is 0.5 or more, or may be 0.6 or more in order to sufficiently increase the strength of the produced silicon nitride sintered body. On the other hand, the ratio of the amount of surface fluorine to the total amount of fluorine may be 0.66 or less in order to further reduce the production cost.

The amount of internal fluorine in the silicon nitride powder may be 150 to 800 ppm by mass or 200 to 700 ppm by mass in order to achieve both a low production cost and high thermal conductivity at a high level. Internal fluorine is fluorine that is present inside the silicon nitride powder without being exposed on the surface. The amount of internal fluorine can be adjusted by changing the proportion of the fluorine-containing nitriding aid mixed into the raw material of the silicon nitride powder. Here, the nitriding aid is a substance having a function of promoting a nitriding reaction of silicon. Examples of such substances include fluorides of the elements Li, Na, K, Mg, Ca, Sr, and Ba.

A total amount of fluorine in the silicon nitride powder can be determined by quantifying the amount of fluorine desorbed by burning the silicon nitride powder using an ion chromatography system. The amount of surface fluorine can be determined by boiling dispersed water in which a silicon nitride powder is dispersed in water, extracting fluorine present on the surface of the silicon nitride powder in water, and quantifying the extracted fluorine using the ion chromatography system. The amount of internal fluorine can be determined by subtracting the amount of surface fluorine from the total amount of fluorine. In the present disclosure, the total amount of fluorine is the ratio of the mass of fluorine to the total mass of the silicon nitride powder. On the other hand, the amount of internal fluorine is the ratio of the mass of internal fluorine to the total mass of the silicon nitride powder. In addition, the amount of surface fluorine is the ratio of the mass of surface fluorine to the total mass of the silicon nitride powder. Therefore, the following formula is established.

$$\text{Total amount of fluorine (ppm by mass)} = \text{amount of internal fluorine (ppm by mass)} + \text{amount of surface fluorine (ppm by mass)}$$

A method for producing a silicon nitride powder according to one embodiment includes a firing step in which a silicon powder and fluoride are mixed to obtain a raw material in which the content of fluoride with respect to the silicon powder is 0.1 to 2 mass% or less, and the raw material is then fired under a mixed atmosphere containing nitrogen and at least one selected from the group consisting of hydrogen and ammonia to obtain a fired product, a crushing step in which the fired product is crushed, and a post-treatment step in which the crushed fired product is treated with hydrofluoric acid having a hydrogen fluoride concentration of 10 to 40 mass%.

The fluoride mixed with the silicon powder functions as a nitriding aid, and examples thereof include fluorides of the elements Li, Na, K, Mg, Ca, Sr, and Ba. The content of fluoride with respect to the silicon powder in the raw material may be 0.3 to 1.8 mass%. When the content of fluoride with respect to the silicon powder in the raw material is too high, a total amount of fluorine and an amount of Ca in the silicon nitride powder tend to increase. When the purity of the silicon powder and the proportion of fluoride mixed are changed, it is possible to adjust a total amount of fluorine and a total content of Fe, Al, and Ca in the silicon nitride powder. In order to smoothly produce a silicon nitride powder in which a total amount of fluorine and a total content of Fe, Al, and Ca are within the above ranges, the purity of the silicon powder mixed with fluoride may be, for example, 99.0 to 99.9 mass%.

In the firing step, a raw material containing silicon powder and fluoride is fired under a mixed atmosphere containing nitrogen and at least one selected from the group consisting of hydrogen and ammonia to obtain a nitride. A total of a contained ratio of hydrogen and ammonia in the mixed atmosphere may be 10 to 40 volume%. The firing temperature may be, for example, 1,100 to 1,450 °C or 1,200 to 1,400 °C. The firing time may be, for example, 30 to 100 hours.

When the silicon nitride obtained in the firing step is in the form of an ingot, the crushing step of crushing the fired product is performed. Crushing may be performed in a plurality of stages of coarse crushing and fine crushing. For example, crushing may be performed in a wet process using a ball mill. The fired product may be crushed until the specific surface area is 8.0 to 15.0 m$^2$/g.

In the post-treatment step, the crushed fired product and hydrofluoric acid having a hydrogen fluoride concentration of 10 to 40 mass% are mixed and treated. For example, the fired product may be dispersed in hydrofluoric acid and treated. The concentration of hydrogen fluoride in hydrofluoric acid may be 15 to 30 mass%. In the post-treatment step, the temperature of hydrofluoric acid is, for example, 40 to 80 °C. In addition, the time for which the silicon nitride powder is immersed in hydrofluoric acid is, for example, 1 to 10 hours.

According to such a production method, a total amount of fluorine, an amount of internal fluorine, an amount of surface fluorine and a total content of Fe, Al, and Ca in the silicon nitride powder can be adjusted within the above ranges. This production method is a method corresponding to a so-called direct nitriding method, and allows a silicon nitride powder to be produced at a production cost lower than that of an imide method. Although such a silicon nitride powder contains a certain degree of impurities, it can be suitably used as a sintered raw material for a silicon nitride sintered body having high thermal conductivity.

A method for producing a silicon nitride sintered body according to one embodiment includes a step in which a sintered raw material containing the above silicon nitride powder as a main component is molded and sintered. The sintered raw material may contain an oxide-based sintering aid in addition to the silicon nitride powder. Examples of oxide-based sintering aids include $Y_2O_3$, MgO and $Al_2O_3$. The content of the oxide-based sintering aid in the sintered raw material may be, for example, 3 to 10 mass%. In this step, fluorine present on the surface of the silicon nitride powder reacts with the oxide-based sintering aid, and sintering of silicon nitride is promoted.

In the above step, for example, the above sintered raw material is pressed with a molding pressure of 3.0 to 30 MPa to obtain a molded component. The molded component may be produced with a uniaxial pressure or may be produced by CIP. In addition, it may be fired while being molded with a hot press. The molded component may be fired in an inert gas atmosphere of nitrogen gas, argon gas, or the like. The pressure during firing may be 0.7 to 1 MPa. The firing temperature may be 1,860 to 2,100 °C or 1,880 to 2,000 °C. The firing time at the firing temperature may be 6 to 20 hours or 8 to 16 hours. The rate of temperature rise to the firing temperature may be, for example, 1.0 to 10.0 °C/hour.

The silicon nitride sintered body produced in this manner has a low production cost and also has excellent heat dissipation because it has high thermal conductivity. In addition, when the amount of surface fluorine in the silicon nitride powder used as a raw material increases, the silicon nitride sintered body having excellent strength can be obtained. The thermal conductivity of the silicon nitride sintered body may be, for example, 100 W/mK or more or 110 W/mK or more under an environment of 25 °C. The 3-point bending strength of the silicon nitride sintered body may be, for example, 500 MPa or more or 600 MPa or more at room temperature.

While some embodiments have been described above, the present disclosure is not limited to the embodiments.

[Examples]

The content of the present disclosure will be described in more detail with reference to examples and comparative examples, but the present disclosure is not limited to the following examples.

(Illustrative Example 1)

<Preparation of silicon nitride powder>

A commercially available silicon powder (specific surface area: 3.0 m$^2$/g) was immersed in a mixed acid for a pretreatment. In the pretreatment, the silicon powder was put into the mixed acid whose temperature was adjusted to 60 °C and immersed for 2 hours. Regarding the mixed acid used in the pretreatment, a mixed acid containing commercially available hydrochloric acid (concentration: 35 mass%) and hydrofluoric acid (concentration: 55 mass%) at a mass ratio of 10:1 was used. Then, the silicon powder was removed from the mixed acid and washed with water, and dried under a nitrogen atmosphere.

The dried silicon powder and calcium fluoride were mixed to prepare a raw material. In this case, calcium fluoride was mixed in a ratio of 1.5 mass% with respect to the silicon powder. A molded component (bulk density: 1.4 g/cm$^3$) was produced using the raw material and fired using an electric furnace at 1,400 °C for 60 hours to produce a silicon nitride ingot. The atmosphere during firing was a mixed atmosphere containing nitrogen and hydrogen ($N_2$:$H_2$=80:20, based on volume). The obtained ingot was coarsely crushed and then wet crushed with a ball mill.

The silicon nitride powder obtained by wet crushing was subjected to a post-treatment of immersion in hydrofluoric acid (concentration: 10 mass%) at a temperature of 60 °C for 2 hours. Then, the silicon nitride powder was removed from the hydrofluoric acid, washed with water, and dried under a nitrogen atmosphere. In this manner, the silicon nitride powder of Example 1 was obtained.

<Evaluation of silicon nitride powder>

A total amount of fluorine, an amount of surface fluorine and an amount of internal fluorine in the silicon nitride powder were measured according to the following procedure. The silicon nitride powder was heated using an automatic sample combustion device (device name: AQF-2100H type commercially available from Mitsubishi Chemical Corporation), and the generated gas was dissolved in water. Fluorine dissolved in the water was measured using an ion chromatography system (device name: ICS-2100 commercially available from Thermo Fisher Scientific). Based on this measured value, the fluorine concentration (total amount of fluorine) of the silicon nitride powder was calculated.

2.5 g of a silicon nitride powder was put into 25 ml of water boiling at 180 °C, the boiling was continued for 2 hours, and fluorine was extracted in the water. The fluorine extracted in the water was measured using an ion chromatography system (device name: ICS-2100 commercially available from Thermo Fisher Scientific). Based on this measured value, an amount of fluorine on the surface of the silicon nitride powder (amount of surface fluorine) was calculated. An amount of internal fluorine was determined by subtracting the amount of surface fluorine from the total amount of fluorine. These results are shown in Table 1.

The contents of Fe, Al, and Ca in the silicon nitride powder were measured using an X-ray fluorescence spectrometer (device name: ZSX-PrimusII commercially available from Rigaku Corporation). The respective contents and the total content are shown in Table 1.

<Production of silicon nitride sintered body>

90 parts by mass of the prepared silicon nitride powder, 5 parts by mass of $Y_2O_3$ powder having an average particle size of 1.5 μm, and 5 parts by mass of $Yb_2O_3$ powder having an average particle size of 1.2 μm were mixed and wet-mixed in methanol for 4 hours. Then, the mixed powder obtained by drying was molded in a mold at a pressure of 10 MPa. Then, CIP molding was additionally performed at a pressure of 25 MPa. The obtained molded component was put into a carbon crucible together with a packed powder composed of a mixed powder containing a silicon nitride powder and a BN powder. The crucible was fired under a nitrogen-pressurized atmosphere of 1 MPa at a temperature of 1,900 °C for 12 hours to produce a silicon nitride sintered body.

<Evaluation of silicon nitride sintered body>

The silicon nitride sintered body was ground to produce a disk body of 10 mm φ × 3 mm for thermal conductivity measurement. A thermal diffusivity and a specific heat capacity were measured according to a laser flash method (according to JIS R1611), and the product of the density, the thermal diffusivity and the specific heat capacity of the sintered body was calculated and used as the thermal conductivity at room temperature. In addition, a test piece for strength measurement was produced according to JIS R1601:2008, and the 3-point bending strength was measured at room temperature. The measurement results are shown in Table 2 as relative values based on the measured value of Example 1.

(Illustrative Example 2, Examples 3 and 4, and Comparative Examples 1 to 4)

Silicon nitride powders were prepared in the same manner as in Example 1 except that the ratio of calcium fluoride mixed with respect to the silicon powder was changed as shown in Table 1 and the concentration of hydrofluoric acid (concentration of hydrogen fluoride) used in the post-treatment was changed as shown in Table 1. In the same manner as in Example 1, a total amount of fluorine, an amount of surface fluorine and an amount of internal fluorine were determined for the examples and the comparative examples. In addition, the ratio of the amount of surface fluorine to the total amount of fluorine (indicated as "surface/whole" in Table 1) was determined. The results are shown in Table 1.

In the same manner as in Example 1, silicon nitride sintered bodies were produced using the silicon nitride powder and evaluated. The measurement results are shown in Table 2 as relative values based on the measured value of Example 1.

[Table 1]

| | Raw material | Post-treatment | Silicon nitride powder | | | | |
|---|---|---|---|---|---|---|---|
| | Calcium fluoride | Concentration of hydrogen fluoride | Amount of internal fluorine | Amount of surface fluorine | Total amount of fluorine | Surface/ whole | Total amount of Fe, Al and Ca |
| | mass% | mass% | ppm by mass | ppm by mass | ppm by mass | | ppm by mass |
| Illustrative Example 1 | 1.5 | 10 | 700 | 200 | 900 | 0.22 | 500 |
| Illustrative Example 2 | 0.8 | 15 | 450 | 350 | 800 | 0.44 | 400 |
| Example 3 | 0.3 | 30 | 200 | 600 | 800 | 0.75 | 500 |
| Example 4 | 0.4 | 20 | 250 | 450 | 700 | 0.64 | 600 |
| Comparative Example 1 | 1.0 | 30 | 500 | 600 | 1,100 | 0.55 | 500 |
| Comparative Example 2 | 1.5 | 10 | 700 | 200 | 900 | 0.22 | 1,500 |
| Comparative Example 3 | 1.5 | 30 | 700 | 600 | 1,300 | 0.46 | 500 |
| Comparative Example 4 | 0.3 | 55 | 200 | 1,000 | 1,200 | 0.83 | 500 |

[Table 2]

| | Silicon nitride sintered body | |
|---|---|---|
| | Thermal conductivity | Strength |
| | Relative value | Relative value |
| Illustrative Example 1 | 1.0 | 0.8 |
| Illustrative Example 2 | 1.0 | 1.0 |
| Example 3 | 1.2 | 1.4 |
| Example 4 | 1.3 | 1.5 |
| Comparative Example 1 | 0.8 | 1.0 |
| Comparative Example 2 | 0.6 | 0.8 |
| Comparative Example 3 | 0.7 | 0.9 |
| Comparative Example 4 | 0.8 | 1.6 |

**Industrial Applicability**

According to the present disclosure, it is possible to provide a silicon nitride powder in which it is possible to produce a silicon nitride sintered body having high thermal conductivity at a low production cost and a method for producing the same. In addition, according to the present disclosure, it is possible to provide a method for producing a silicon nitride sintered body through which it is possible to produce a silicon nitride sintered body having high thermal conductivity at a low production cost.

**Claims**

1. A silicon nitride powder in which a total amount of fluorine is 100 to 1,000 ppm by mass, and a total amount of Fe, Al and Ca is 100 to 1,000 ppm by mass, wherein a ratio of the amount of surface fluorine to the total amount of fluorine is 0.5 or more.

2. The silicon nitride powder according to claim 1, wherein an amount of surface fluorine is 300 ppm by mass or more.

3. The silicon nitride powder according to claim 1 or 2, wherein a ratio of the amount of surface fluorine to the total amount of fluorine is 0.66 or less.

4. A method for producing a silicon nitride powder, comprising:

    a step in which a raw material containing a silicon powder and fluoride, and the content of fluoride with respect to the silicon powder in the raw material is 0.1 to 2 mass% is fired under a mixed atmosphere containing nitrogen and at least one selected from the group consisting of hydrogen and ammonia to obtain a fired product; and
    a step in which the fired product is treated with hydrofluoric acid having a hydrogen fluoride concentration of 10 to 40 mass%,
    wherein a total amount of fluorine in the silicon nitride powder is 100 to 1,000 ppm by mass, and a total amount of Fe, Al and Ca in the silicon nitride powder is 100 to 1,000 ppm by mass, a ratio of the amount of surface fluorine to the total amount of fluorine being 0.5 or more.

5. A method for producing a silicon nitride sintered body, comprising a step in which a raw material for sintering, which contains the silicon nitride powder produced according to claim 4 is molded and sintered.

**Patentansprüche**

1. Siliciumnitridpulver, in dem eine Gesamtfluormenge 100 bis 1.000 Masse-ppm beträgt und eine Gesamtmenge an Fe, Al und Ca 100 bis 1.000 Masse-ppm beträgt, wobei ein Verhältnis von Oberflächenfluormenge zu Gesamtfluormenge 0,5 oder mehr beträgt.

2. Siliciumnitridpulver gemäß Anspruch 1, wobei eine Oberflächenfluormenge 300 Masse-ppm oder mehr beträgt.

3. Siliciumnitridpulver gemäß Anspruch 1 oder 2, wobei ein Verhältnis der Oberflächenfluormenge zur Gesamtfluormenge 0,66 oder weniger beträgt.

4. Verfahren zur Herstellung eines Siliciumnitridpulvers, umfassend:

    einen Schritt, in dem ein Ausgangsmaterial, das ein Siliciumpulver und Fluorid enthält, und der Fluoridgehalt in Bezug auf das Siliciumpulver in dem Ausgangsmaterial 0,1 bis 2 Masse-% beträgt, unter einer Mischatmosphäre gebrannt wird, die Stickstoff und mindestens eines, ausgewählt aus der Gruppe, bestehend aus Wasserstoff und Ammoniak, enthält, um ein gebranntes Produkt zu erhalten, und
    einen Schritt, in dem das gebrannte Produkt mit Fluorwasserstoffsäure mit einer Fluorwasserstoffkonzentration von 10 bis 40 Masse-% behandelt wird,
    wobei eine Gesamtfluormenge in dem Siliciumnitridpulver 100 bis 1.000 Masse-ppm beträgt und eine Gesamtmenge an Fe, Al und Ca in dem Siliciumnitridpulver 100 bis 1.000 Masse-ppm beträgt, wobei ein Verhältnis von Oberflächenfluormenge zu Gesamtfluormenge 0,5 oder mehr beträgt.

5. Verfahren zur Herstellung eines Siliciumnitridsinterkörpers, umfassend einen Schritt, in dem ein Ausgangsmaterial zum Sintern, das das gemäß Anspruch 4 hergestellte Siliciumnitridpulver enthält, geformt und gesintert wird.

**Revendications**

1. Poudre de nitrure de silicium dans laquelle une quantité totale de fluor est de 100 à 1000 ppm en masse, et une quantité totale de Fe, Al et Ca est de 100 à 1000 ppm en masse, dans laquelle un rapport de la quantité de fluor de surface par rapport à la quantité totale de fluor est de 0,5 ou plus.

**2.** Poudre de nitrure de silicium selon la revendication 1, dans laquelle une quantité de fluor de surface est de 300 ppm en masse ou plus.

**3.** Poudre de nitrure de silicium selon la revendication 1 ou la revendication 2, dans laquelle un rapport de la quantité de fluor de surface par rapport à la quantité totale de fluor est de 0,66 ou moins.

**4.** Procédé de production d'une poudre de nitrure de silicium, comprenant :

une étape dans laquelle une matière première contenant une poudre de silicium et un fluorure, et la teneur en fluorure par rapport à la poudre de silicium dans la matière première est de 0,1 à 2 % en masse est cuite sous une atmosphère mixte contenant de l'azote et au moins un sélectionné dans le groupe consistant en l'hydrogène et l'ammoniac pour obtenir un produit cuit ; et
une étape dans laquelle le produit cuit est traité avec de l'acide fluorhydrique présentant une concentration en fluorure d'hydrogène de 10 à 40 % en masse,
dans lequel une quantité totale de fluor dans la poudre de nitrure de silicium est de 100 à 1000 ppm en masse, et une quantité totale de Fe, Al et Ca dans la poudre de nitrure de silicium est de 100 à 1000 ppm en masse, un rapport de la quantité de fluor de surface par rapport à la quantité totale de fluor étant de 0,5 ou plus.

**5.** Procédé de production d'un corps fritté en nitrure de silicium, comprenant une étape dans laquelle une matière première pour frittage, qui contient la poudre de nitrure de silicium produite selon la revendication 4 est moulée et frittée.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000178013 A
- JP 58084108 A
- JP 2011077546 A
- JP 2000302421 A